# EUROPEAN PATENT APPLICATION

(11) **EP 4 583 570 A1**
(43) Date of publication of application: **09.07.2025**
(21) Application number: 24223911.9
(22) Date of filing: 31.12.2024
(51) Int. Cl.: H04W 28/02, H04W 48/18, H04W 76/12

(54) **NETWORK SLICE SWITCHING FOR FIXED WIRELESS ACCESS SYSTEMS**

(30) Priority: 02.01.2024 US 202418402500
(71) Applicant: T-Mobile USA, Inc., Bellevue, WA 98006-1350 (US)
(72) Inventor: TRAN, Antoine T., Bellevue, 98006 (US); TRAN, Emile Minh, Bellevue, 98006 (US); KWOK, Ming Shan, Bellevue, 98006 (US)
(74) Representative: Suddaby, Mark Edward

(57) **Abstract**

Methods and systems for network slice switching in a fixed wireless access (FWA) system are described herein. In one implementation, a device configured to route outgoing data traffic generated in the FWA system may receive from a first client device on the FWA system, a request to transmit data packets associated with a service to a service provider located external of the FWA system. The device may obtain, from the request, a first tag being indicative of a first quality of service (QoS) category requested by the service. The device may further determine, based on the first tag, a network slice to be assigned for the service, establish, via a wireless network, a session corresponding to the network slice between the first client device and the service provider, and facilitate transmission of the data packets associated with the service on the session.

## Description

### BACKGROUND

Fixed Wireless Access (FWA) is an innovative use case that uses the radio spectrum of fourth generation (4G) and fifth generation (5G) technologies to provide wireless broadband connectivity between two fixed points, for example, a mobile network cell tower and a FWA device in a customer's home. The radio spectrum used by FWA is the same as that used for mobile phone services. 4G and 5G technologies were designed for mobility where temporary degradation of service is more than compensated by the convenience of on-the-go connectivity. However, when 4G and 5G technologies are as a fixed broadband solution, customers expect FWA to provide the same level of user experience as any other fixed broadband technology. Fixed wireless services, therefore, need to be carefully managed to keep service levels up and costs down.

One solution is to take advantage of virtual network slicing to separate the 5G use cases and ensure consistent level of user experience, for example, separating the virtual network slices for residential broadband and mobile services where each slice is optimized for the best performance and capped for predictable service. The network slicing implementation defined in current 3GPP standard is based on applications or use cases executed on the user equipment (UE). Current 3GPP standard has no guidelines regarding the network slicing management in the home routers connected to FWA.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1 illustrates an example environment, in which techniques for network slice switching in a fixed wireless access system are implemented, according to an implementation of the present disclosure.
FIG. 2 illustrates an example diagram for network slice switching in a fixed wireless access system, according to an implementation of the present disclosure.
FIG. 3 illustrates an example network slice switching scheme, according to an implementation of the present disclosure.
FIG. 4 illustrates an example network slice switching scheme, according to another implementation of the present disclosure.
FIG. 5 illustrates an example process for network slice switching in a fixed wireless access system, according to an implementation of the present disclosure.
FIGS. 6 illustrates an example process for network slice switching in a fixed wireless access system, according to another implementation of the present disclosure.
FIG. 7 illustrates an example computer device that implements techniques for network slice switching in a fixed wireless access system, according to the present disclosure.

### DETAILED DESCRIPTION

Techniques for network slice switching in a fixed wireless access system are disclosed herein.

According to an aspect of the present disclosure, a device configured to route outgoing data traffic generated in the FWA system may receive from a first client device on the FWA system, a request to transmit data packets associated with a service to a service provider located external of the FWA system. The device may obtain, from the request, a first tag being indicative of a first quality of service (QoS) category requested by the service. The device may further determine, based on the first tag, a network slice to be assigned for the service, establish, via a wireless network, a session corresponding to the network slice between the first client device and the service provider, and facilitate transmission of the data packets associated with the service on the session.

In some examples, the device may include an indoor router and an indoor/outdoor antenna that wirelessly connected to a cell tower of a wireless communication network. The FWA system may be implemented in the houses, office buildings, and other places, where wired connections are unavailable.

In some examples, mapping tables between the tags and the QoS categories may be configured by individual client devices in the FWA system. The various mapping tables may be shared with the device and saved in a database. In implementations, the device may further receive a first tagging table configured by the first client device. In some examples, the first tagging table may define a set of first tags to represent one or more QoS categories. The device may associate the set of first tags with corresponding network slices based on the one or more QoS categories. The device may further generate, in a database, a first mapping table associated with the first client device, the first mapping table including the set of first tags and the corresponding network slices.

In implementations, the device may further obtain, from the request, an identification of the first client device. The device may retrieve from the database and based on the identification, the first mapping table, and determine, based on the first mapping table and the first tag, the network slice.

In implementations, the device may receive, from a second client device on the network, a second tagging table configured by the second client device. The second tagging table may define a set of second tags to represent the one or more QoS categories. The device may further associate, based on the one or more QoS categories, the set of second tags with corresponding network slices, and generate, in the database, a second mapping table associated with the second client device, the second mapping table including the set of second tags and the corresponding network slices. In some examples, the set of second tags are different from the set of the first tags.

In some examples, the device may configure a mapping table and publish the mapping table to the client devices in the FWA system. The single mapping table may be universally used by the client devices. In implementations, the device may configure, in a database, a mapping table defining a set of tags to represent one or more QoS categories, and transmit the mapping table to the first client device. In some examples, the first client device, based on the first QoS category requested by the service, may tag the data packets associated with the service using the first tag according to the mapping table.

In implementations, the device may further configure, in the database, a translation table that translates the set of tags to a set of network slices, respectively, and a precedence order with respect to the set of network slices. In some examples, the precedent order may indicate an order of secondary network slices to be used when a first network slice is unavailable. The device may further transmit the translation table and the precedence order to the first client device.

In implementations, the device may determine that the network slice corresponding to the first QoS category is unavailable. Based on the precedent order, the device may further determine a secondary network slice from the set of network slices, assign the secondary network slice for the service, and route the data packets to the second network slice to be sent to the service provider.

According to another aspect of the present disclosure, the device may implement a machine learning model to automatically tag the outgoing data packets to indicate the desired network slices. In implementations, a device configured to route outgoing data traffic generated in an FWA system may receive, from a client device on the network, a request to transmit data packets associated with a service to a service provider located external of the network. The device may obtain, from the request, an identification of the client device and an internet protocol (IP) address of the service provider and input the identification of the client device and the IP address of the service provider to a machine learning model. The device may further execute the machine learning model to determine a network slice to be assigned for the service, establish, via a wireless network, a session corresponding to the network slice between the client device and the service provider, and facilitate transmission of the data packets associated with the service on the session.

In implementation, the device may obtain tagging data associated with historical data packets outgoing the network, generate, based on the tagging data, training data, and train, using the training data, the machine learning model to automatically tag an outgoing data packet with the network slice.

According to present disclosure, the outgoing data packets from an FWA system are tagged to indicate the QoS requirement for a particular service to the router, the FWA system can then optimize the network resources use (e.g., network slices) and dynamically support the multiple QoS needs associated with the services used by the subscribers in the system.

The techniques discussed herein may be implemented in a computer network using one or more of protocols including but are not limited to Ethernet, 3^{rd} generation (3G), 4G, long term evolution (LTE), 5G, 6^{th} generation (6G), the further radio access technologies, or any combination thereof. In some examples, the network implementations may support standalone architectures, non-standalone architectures, dual connectivity, carrier aggregation, etc. Example implementations are provided below with reference to the following figures.

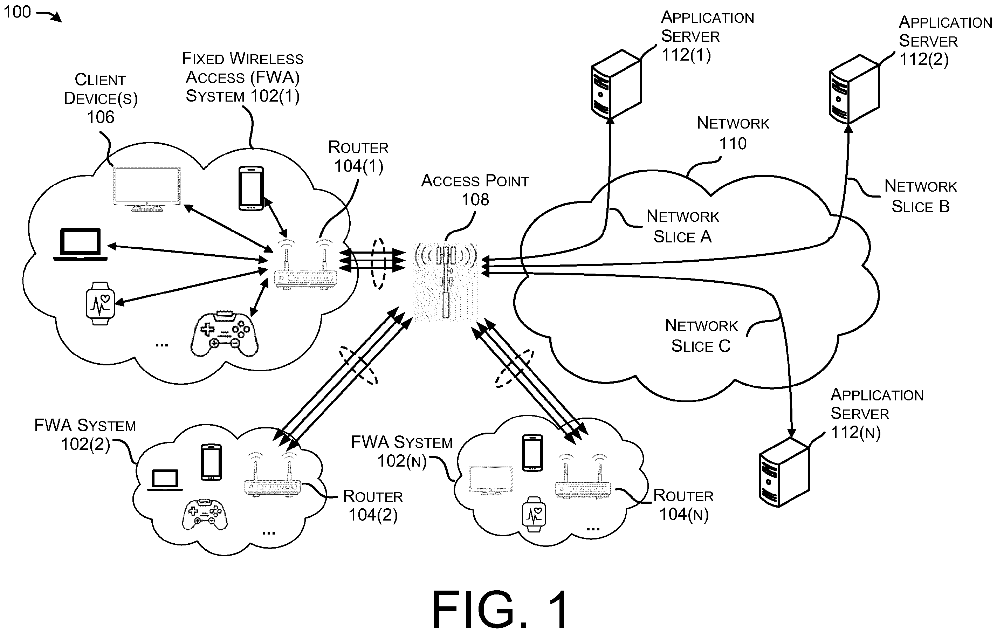

FIG. 1 illustrates an example environment, in which techniques for network slice switching in a fixed wireless access system are implemented, according to an implementation of the present disclosure.

As illustrated, an example environment 100 may include one or more fixed wireless access (FWA) systems 102(1), 102(2), ..., and 102(n) (hereinafter referred to as FWA system 102) that are connected to a network 110 through an access point 108. Each of the FWA systems may include a plurality of client devices and a router configured to facilitate wireless transmission of data traffic in and out of the FWA system.

For example, FWA system 102(1) may include one or more client devices 106 and a router 104(1). The one or more client devices 106 may be any device that can connect to the router 104(1) through a wired and/or wireless connection. In some examples, the client device 106 may a mobile device, such as a cellular phone or a smart phone. In other examples, the client device 106 may be a personal computer (PC) such as a laptop, desktop, or workstation, a personal digital assistant (PDA), a tablet computer, a media player, a TV, a gaming device, or any other type of computing or communication device. In yet other examples, the client device 106 may be a wearable device and/or wearable materials, such as a smart watch, smart glasses, clothes made of smart fabric, etc.

The router 104(1) may be configured to be compatible with a variety of radio access technologies (RATs) used by the access point 108. In some examples, the router 104(1) may include an indoor routing device and an indoor or outdoor antenna. Techniques such as, advanced antenna designs, dual connectivity, carrier aggregation, and Multiple-Input Multiple-Output (MIMO) may be used in the indoor or outdoor antenna of the router in the FWA system.

The access point 108 may be a cell tower located in a radio access network (RAN) compatible with the variety of RATs, such as 5G NR, 4G/LTE, HSDPA/ HSPA+, UMTS, CDMA, GSM, WiMAX, Wi-Fi, and/or any other previous or future generation of radio access technology.

The network 110 may include a telecommunication core network compatible with one or more radio access technologies, wireless access technologies, protocols, and/or standards. For example, wireless and radio access technologies can include 5G technology, Long Term Evolution (LTE)/LTE Advanced technology, Evolved Packet Core (EPC), other 4G technology, High-Speed Data Packet Access (HSDPA)/Evolved High-Speed Packet Access (HSPA+) technology, Universal Mobile Telecommunications System (UMTS) technology, Global System for Mobile Communications (GSM) technology, WiFi technology, and/or any other previous or future generation of radio access technology.

As discussed herein, the FWA system may be implemented at a residential home, an office, or a business building that a wired connection to the Internet is unavailable. In some examples, the access point 108 may be configured to serve multiple FWA systems, e.g., FWA system 102(1), FWA system 102(2), ..., and FWA system 102(n). As illustrated, a router 104(2) of the FWA system 102(2) and a router 104(n) of the FWA system 102(n) may be configured to wirelessly communicate with the access point 108 to facilitate data transmission in and out of the corresponding FWA system.

Subscribers of the FWA system may request to use various services from the client devices. A plurality of application servers, e.g., 112(1), 112(2), ..., and 112(n) (hereinafter referred to as application server 112), that provide these services may have various quality of service (QoS) requirements. For example, an application server that provides online gaming service may require the low latency to support a real-time online game. In another example, an application server that provides video conferencing service may require medium bandwidth to support a video conference where the participants join from various locations. In another example, an application server that provides 4K video content may require high bandwidth to support 4K video streaming.

In implementations, the router of an FWA system, e.g., router 104(1) of FWA system 102(1), when being requested to route the data to an application server located external of the FWA system, may choose a network slice to accommodate the QoS needs of the particular service. For examples, as illustrated in FIG. 1, data traffic with application server 112(1) as destination may be transmitted through network slice A, data traffic with application server 112(2) as destination may be transmitted through network slice B, and data traffic with application server 112(n) as destination may be transmitted through network slice C.

In implementations, the client device 106 of the FWA system 102(1), when sending an outgoing data packet to the router 104(1), may use a tag and/or a tag ID to represent the QoS category desired by the service and attach the tag to the outgoing data packet. The router 104(1) may maintain a tag-to-slice translation table in its database. Upon receiving the data packet, the router 104(1) may retrieve the tag from the data packet and translate the tag to a network slice based on the tag-to-slice translation table.

In some examples, different client devices in an FWA system may define different tags to represent a set of QoS categories and generate different device tag tables. The router of the FWA system may store the device tag tables defined by different client devices. When receiving outgoing data traffic from the client devices in the FWA system, the router may dynamically generate a tag-to-slice translation table that includes the different device tag tables so that the data traffic from various client devices may be switched to the corresponding network slices.

In other examples, the router and the client devices in the FWA system may use an agreed QoS-to-tag mapping to tag the outgoing data packets. For example, the router of the FWA system may configure an QoS-to-tag mapping table and publish the QoS-to-tag mapping table to the client devices in the FWA system. The client devices in the FWA system may then use the QoS-to-tag mapping table to tag the outgoing data traffic.

As discussed herein, the client devices in an FWA system may tag the outgoing data packets using a set of tags and/or tag IDs to represent QoS categories. As a mapping between the tags and the QoS categories is shared with the router of the FWA system and/or agreed by the router of the FWA system, the router may select a network slice that can accommodate the QoS requirement to send the data traffic to the service provider (e.g., application server 112). By utilizing the tagging scheme, the FWA system can provide multiple levels of QoS services to the subscribers while optimizing the network resource use.

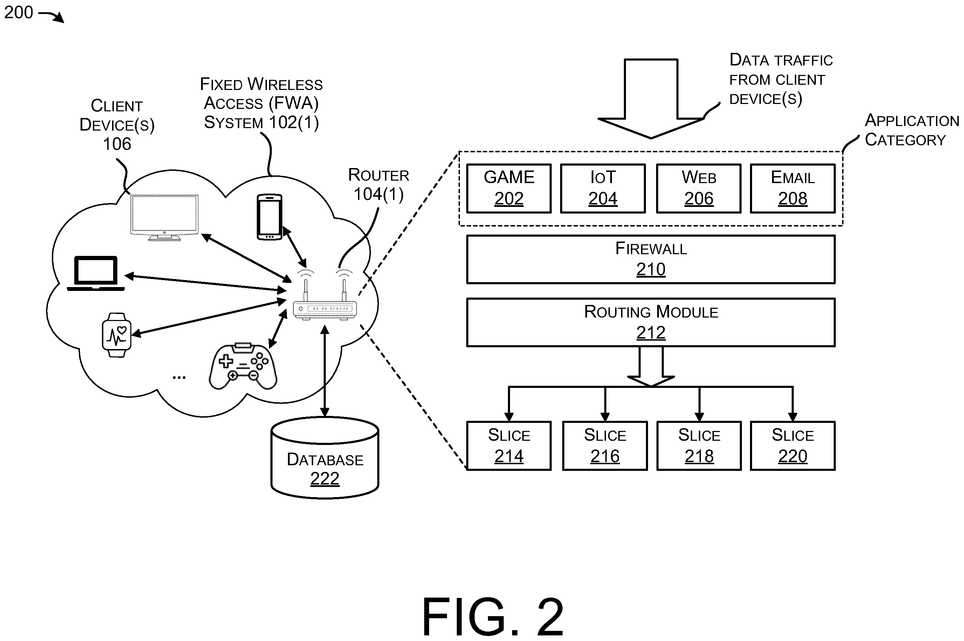

FIG. 2 illustrates an example diagram for network slice switching in a fixed wireless access system, according to an implementation of the present disclosure.

As illustrated, the example diagram 200 for network slice switching may be implemented on the router 104(1) of FIG. 1. Data traffic from the plurality of client devices 106 may be categorized into different application categories such as, game 202, Internet of Things (IoT) 204, Web 206, Email 208, etc. As discussed herein, the different application categories may indicate different levels of QoS services. For instance, the game category may indicate low latency while low bandwidth needs, the loT category may indicate a high bandwidth needs for video streaming, the email category may indicate any default QoS level, etc. In implementations, the data traffic may be tagged by the client devices to represent the desired QoS level. In some examples, all the client devices in the FWA system 102(1) may use an agreed QoS to tag mapping table to tag the data traffic. In other examples, each client device may define its own mapping table. Different device mapping table may be sent and saved in a database 222.

A firewall 210 of the example diagram may be configured to scrutinize those data traffic and determine whether to allow those traffic to go out of the FWA system. Data traffic that is determined to be safe may be passed to a routing module 212. The routing module 212 may be configured to switch the data traffic based on the associated application category to one or more network slices, e.g., slice 214, slice 216, slice 218, or slice 220. As discussed herein, the data traffic is tagged to represent the desired QoS level. The routing module 212 may query a database 222 for mapping information between the tags and the network slices and route the data traffic to the network slices indicated by the various tags.

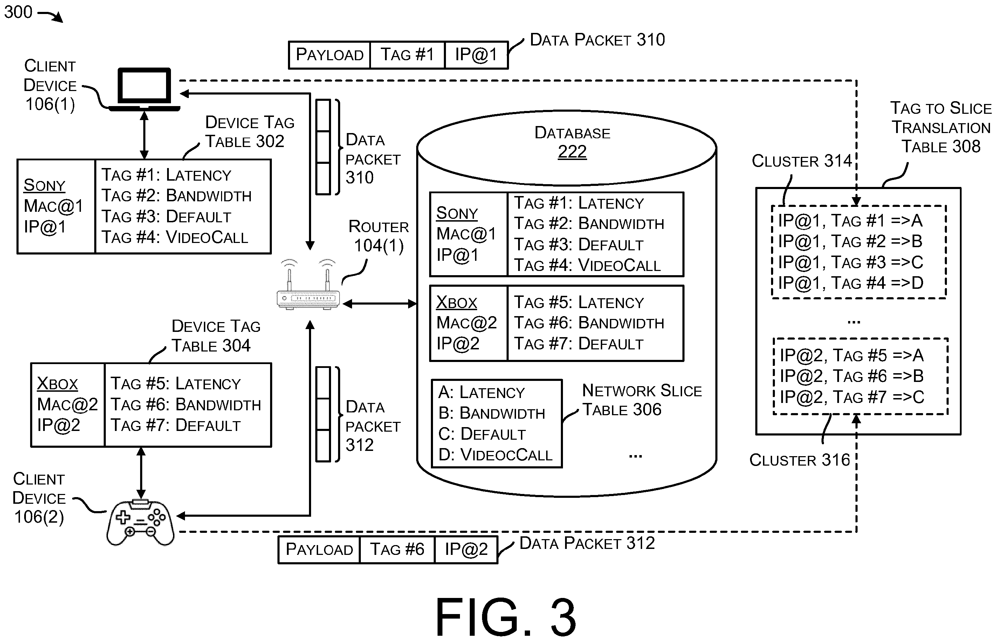

FIG. 3 illustrates an example network slice switching scheme, according to an implementation of the present disclosure. According to the example network slice switching scheme 300, a router of an FWA system may adapt its tag-to-slice mapping to the individual configurations of the client devices in the FWA system.

As shown in FIG. 3, a client device 106(1) residing on the FWA system 102(1) of FIG. 1 may configure a device tag table 302. The device tag table 302 may include identification information of the client device 106(1) such as, description "Sony" of the client device, a MAC address of the client device in the FWA system, an IP address of the client device in the FWA system, etc. The device tag table 302 may further include a mapping defined by the client device 106(1). For example, the device tag table 302 defines tag #1 to represent latency QoS, tag #2 to represent bandwidth QoS, tag #3 to represent default QoS, tag #4 to represent videocall QoS, etc. Further, a client device 106(2) residing on the FWA system 102(1) of FIG. 1 may configure a device tag table 304. The device tag table 304 may include identification information of the client device 106(2) such as, description "Xbox" of the client device, a MAC address of the client device in the FWA system, an IP address of the client device in the FWA system, etc. The device tag table 304 may further include a mapping defined by the client device 106(2). For example, the device tag table 304 defines tag #5 to represent latency QoS, tag #6 to represent bandwidth QoS, tag #7 to represent default QoS, etc.

In implementations, the device tag table 302 and the device tag table 304 may be sent to be stored in the database 222 (as shown in FIG. 2). The database 222 may also include a network slice table 306 that defines a mapping between the network slices and the QoS categories. As shown in FIG. 3, the network slice table 306 may define a network slice A to carry data traffic with latency needs, a network slice B to carry data traffic with bandwidth needs, a network slice C to carry data traffic with default QoS, a network slice D to carry data traffic with videocall needs, etc.

When the client device 106(1) sends a data packet 310 associated with a service, the data packet 310 may be tagged to indicate the desired QoS category. The data packet 310 may include, in addition to the IP address of the client device 106(1) and the payload, a tag ID (e.g., tag #1) to indicate the latency QoS required by the service to the router 104(1). Similarly, when the client device 106(2) sends a data packet 312 associated with a service, the data packet 312 may be tagged to indicate the desired QoS category. The data packet 312 may include, in addition to the IP address of the client device 106(2) and the payload, a tag ID (e.g., tag #6) to indicate the bandwidth QoS required by the service to the router 104(1).

Upon receiving the data packet 310 sent by the client device 106(1) and the data packet 312 sent by the client device 106(2), the router 104(1) may dynamically generate a tag to slice translation table 308 based on the device tag table 302, the device tag table 304 and the network slice table 306. As illustrated, a cluster 314 of the tag to slice translation table 308 may indicate a mapping between the tags and slices for traffic from the client device 106(1), and a cluster 316 of the tag to slice translation table 308 may indicate a mapping between the tags and slices for traffic from the client device 106(2). The router 104(1) may then the route the data packet 310 to network slice A to provide the low latency service to the client device 106(1), and route the data packet 312 to network slice B to provide high or medium bandwidth service to the client device 106(2).

As discussed herein, by tagging the outgoing data packet to indicate the QoS requirement for a particular service to the router, the FWA system can optimize the network slice resources and dynamically support the multiple QoS needs associated with the services used by the subscribers in the system.

It should be understood that the example network slice switch scheme shown in FIG. 3 is for the purpose of illustration. The present disclosure is not intended to be limiting. The database 222 associated with the router may store the device tag tables for all the client devices in the FW system. Different client devices may use the same or different tags to represent the QoS categories. Thus, even if the tags are configured differently at different client devices, the QoS needs for data traffic from different client devices may be the same. When the data packets from different client devices indicate the same QoS needs, those data packets may be routed to the same network slice corresponding to the QoS category.

In some examples (although now shown), the router may also configure a precedence order of the network slices and store the precedence order in the database 222. The precedent order may indicate an order of secondary network slices to be used when a preferred network slice is unavailable. For instance, the precedence order may indicate that if the low latency network slice is unavailable, the system will automatically switch to default network slice. Alternatively or additionally, the individual client device may also configure a precedence order of the tags to indicate to the router an order of the secondary QoS categories if the preferred QoS cannot be provided.

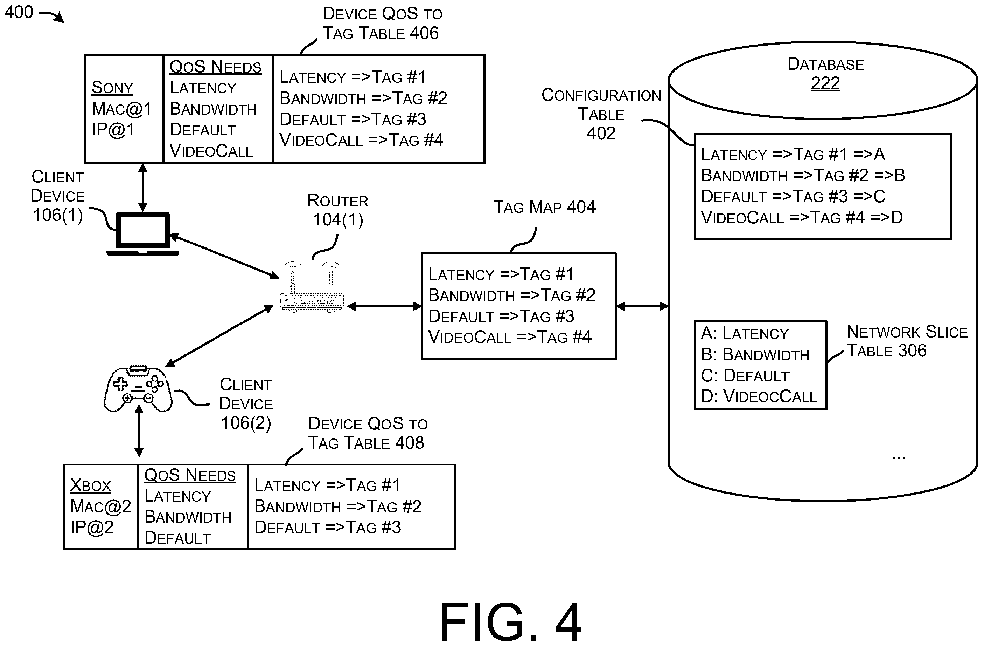

FIG. 4 illustrates an example network slice switching scheme, according to another implementation of the present disclosure. According to the example network slice switching scheme 400, the plurality of client devices in the FW system may adapt themselves to a router's configuration on network slice switching.

As shown in FIG. 4, the router 104(1) may maintain a configuration table 402 in the database 222. The configuration table 402 may define the mappings between the QoS categories, the tags, and the network slice number. For instance, the configuration table 402 may define that the latency QoS is mapped to tag #1 and network slice A, the bandwidth QoS is mapped to tag #2 and network slice B, the default QoS is mapped to tag #3 and network slice C, and the videocall QoS is mapped to tag #4 and network slice D. In some examples, the router 104(1) may also maintain a network slice table 306 that defines a list of network slice IDs that correspond to various QoS categories. The router 104(1) may generate a tag map 404 based on the configuration table 402 and publish the tag map 404 to the client devices in the FW system.

In some examples, each client device, upon receiving the published tag map 404 from the router 104(1), may generate its own device QoS to tag table. For instance, the client device 106(1) may generate a device QoS to tag table 406 that includes the description of the client device (e.g., Sony), the MAC address the client device (e.g., MAC@1), the IP address the client device (IP@1), the categories of QoS needs, a mapping between various QoS categories and the tags, etc. In another example, the client device 106(2) may generate a device QoS to tag table 408 that includes the description of the client device (e.g., Xbox), the MAC address the client device (e.g., MAC@2), the IP address the client device (IP@2), the categories of QoS needs, a mapping between various QoS categories and the tags, etc. The client device 106(1) and the client device 106(2) may further use the individual device QoS to tag tables to tag the outgoing data packets.

As discussed herein, as a single tag map 404 is used by the router and all the client devices in the FWA system, the tags used to represent the QoS categories are the same for all the client devices. The burden on the router to maintain the individual configurations from the client devices may be relieved.

In some examples, the router of the FWA system may track the tags used in the outgoing data packets, the QoS categories associated with the outgoing data packets, and the network slice being assigned for the outgoing data packets. The router may additionally collect the information associated with the originating client device (e.g., description, MAC address, IP address, etc.), a time pattern a particular service was requested, a duration of the PDU session that the particular service was carried, a network slice usage pattern for the particular service (e.g., whether the preferred network slice was switched to a secondary network slice), the destination IP address of the application server, etc. The router may construct training data based on the tracked and collected historical tagging data and further train a machine learning model using the training data to automatically tag the outgoing data packet in the FWA system.

In some examples, online gaming services are often requested on weekends. The machine learning models may be trained to automatically tag the outgoing data packet from an Xbox console sent on the weekends to indicate a low latency network slice to be used. In other examples, video conferencing services are often requested during workdays. In some circumstances, the device may receive more requests regarding the video conferencing services in the morning of the workdays. The machine learning models may be trained to auto-adjust the tagging of the outgoing data packets based on the number of requests being received and/or the number of active PDU sessions. For example, the device may use the machine learning models to tag the outgoing data packets associated with the first video conferencing service request to indicate a medium bandwidth network slice to be used. When a second video conferencing service request is received, the device tag the outgoing data packets to indicate a default network slice (e.g., a low bandwidth network slice) to be used. Once the device detects that the PDU session established for the first video conferencing service request ends, the device may automatically adjust the outgoing data packets associated with the second video conferencing service request from the default network slice to the medium network slice.

In implementations, when a request to transmit data packets from a client device is received, data associated with the request may be inputted to the trained machine learning model. Such data may include but not limited to the identification of the client device, a MAC address of the client device in the FWA system, an IP address of the client device in the FWA system, the destination IP address of the application server, the time the request is received, etc. The machine learning model may then be executed to automatically tag the data packets from the client device. Various machine learning algorithms may be implemented in the machine learning model such as, supervised machine learning algorithm, unsupervised machine learning algorithm, semi-supervised machine learning algorithm, etc.

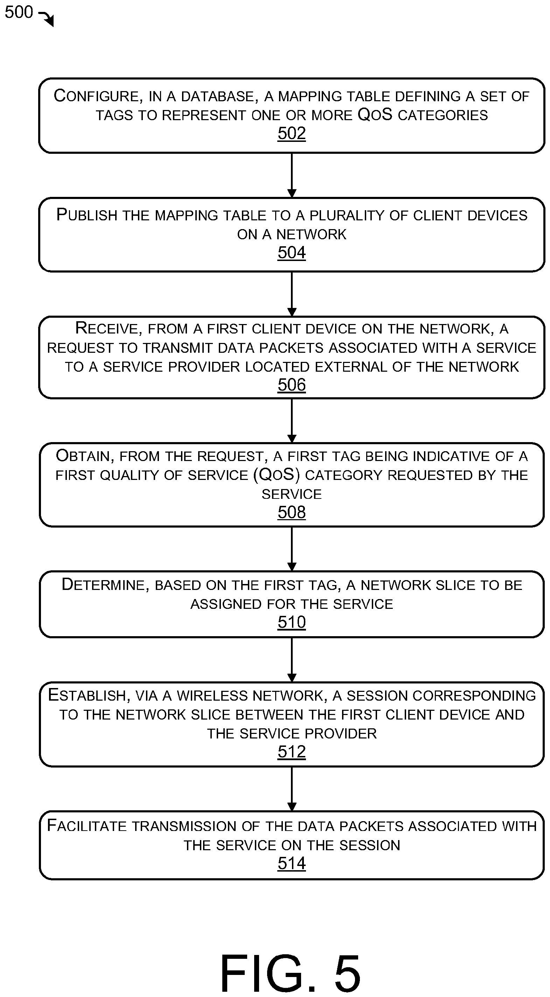

FIG. 5 illustrates an example process for network slice switching in a fixed wireless access system, according to an implementation of the present disclosure. The example process 500 may be performed by a router of an FWA system (e.g., router 104(1) in the FWA system 102(1)). The example process 500 may correspond to the network slice switching scheme shown in FIG. 4.

At operation 502, the process may include configuring, in a database, a mapping table defining a set of tags to represent one or more QoS categories. In some examples, the process may pre-configure a QoS-tag-network slice table and store the QoS-tag-network slice table in a database associated with the router (e.g., database 222 shown in FIGs. 2-4). The process may construct the mapping table defining a set of tags to represent one or more QoS categories based on the QoS-tag-network slice table.

At operation 504, the process may include publishing the mapping table to a plurality of client devices on a network. As discussed herein, the single mapping table defining a set of tags to represent one or more QoS categories may be agreed and used by all the client devices in the FWA system.

At operation 506, the process may include receiving from a first client device on the network, a request to transmit data packets associated with a service to a service provider located external of the network. In some examples, the request may be initiated when a subscriber launches an online game on an Xbox. In other examples, the request may be initiated when a subscriber launches a video conferencing call on a laptop. In yet other examples, the request may be initiated when the subscriber browses a website, sends out an email, or watches a movie online, etc.

At operation 508, the process may include obtaining, from the request, a first tag being indicative of a first quality of service (QoS) category requested by the service. As discussed herein, different type of services may be configured with preferred QoS to satisfy the user's experience. The request to use the service may automatically an indication (e.g., the first tag) to notify the router of the FWA system of the preferred QoS category.

At operation 510, the process may include determining, based on the first tag, a network slice to be assigned for the service. Upon receiving the request, the router may query the associated database for a tag-to-slice mapping and determine a network slice to be assigned for the service to accommodate the QoS needs indicated by the service.

At operation 512, the process may include establishing, via a wireless network, a session corresponding to the network slice between the first client device and the service provider. As discussed herein, the request to use the service on the network slice may be transmitted by the router to a cell tower of a wireless communication network. In some examples, the wireless communication network may include a 5G network, and the cell tower may include a 5G next generation node B (gNB). The request for the network slice assignment may be sent to the cell tower in a network slice selection assistant information (NSSAI) message and further handled by a network slice selection function (NSSF) of the 5G network.

At operation 514, the process may include facilitating transmission of the data packets associated with the service on the session. As discussed herein, once the network slice is assigned for the service between the client device and the application server, a packet data unit (PDU) session may be established between the client device and the application server. The network slice may be released to be used by other services and/or client devices in the FWA system when the PDU session is terminated.

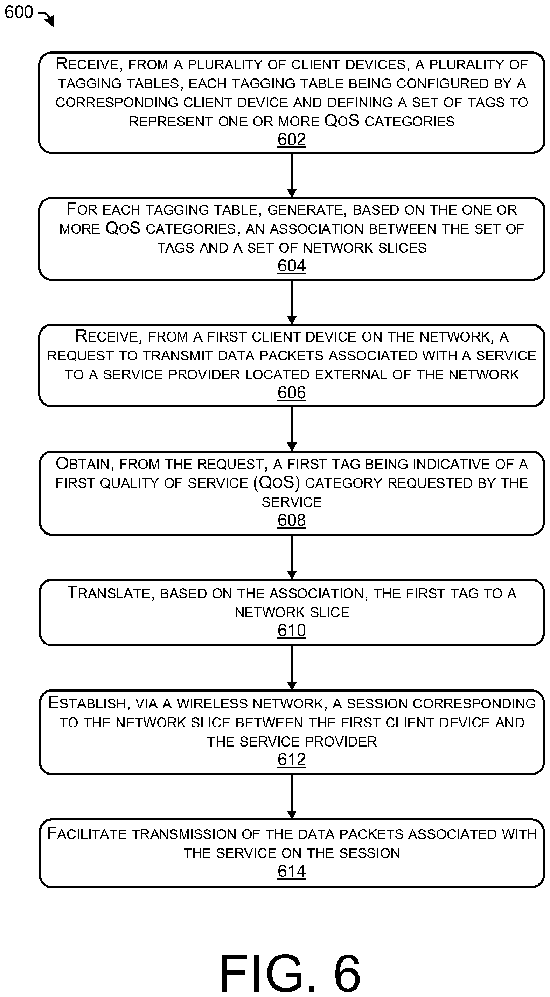

FIG. 6 illustrates an example process for network slice switching in a fixed wireless access system, according to another implementation of the present disclosure. The example process 600 may be performed by a router of an FWA system (e.g., router 104(1) in the FWA system 102(1)). The example process 600 may correspond to the network slice switching scheme as shown in FIG. 3.

At operation 602, the process may include receiving, from a plurality of client devices, a plurality of tagging tables, each tagging table being configured by a corresponding client device and defining a set of tags to represent one or more QoS categories. According to the network slice switching scheme, each client device may configure individual set of tags to represent the QoS categories. The tags and/or tag IDs used by different client devices may be the same or different.

At operation 604, the process may include for each tagging table, generating, based on the one or more QoS categories, an association between the set of tags and a set of network slices. As discussed herein, the router may generate the association between the tags and network slices based on the tagging tables associated with the plurality of client devices. As the tags to represent the QoS may be configured differently by different client devices, the association may be generated individually for each client device. In some examples, the association may be dynamically generated when a request to use the service is received.

At operation 606, the process may include receiving from a first client device on the network, a request to transmit data packets associated with a service to a service provider located external of the network. Similar to the example process 500, the request may be initiated when a subscriber launches an online game on a gaming device, launches a video conferencing call from a computer, or when the subscriber browses a website, sends out an email, or watches a movie online, etc.

At operation 608, the process may include obtaining, from the request, a first tag being indicative of a first quality of service (QoS) category requested by the service. As discussed herein, the set of tags to tag the QoS category are configured by the router and published to all the client devices in the FWA system. Thus, a same QoS service request from different client devices may include the same tag in the request and/or the outgoing data packets.

At operation 610, the process may include translating, based on the association, the first tag to a network slice. In some examples, the router may query the database for a mapping between the tags and the network slices. The router may determine the network slice based on the first tag.

At operation 612, the process may include establishing, via a wireless network, a session corresponding to the network slice between the first client device and the service provider. Similar to the example process 600, the request to use the service on the network slice may be transmitted by the router to a gNB in a 5G network. The request for the network slice assignment may be sent in an NSSAI message and further handled by the NSSF of the 5G network.

At operation 614, the process may include facilitating transmission of the data packets associated with the service on the session. As discussed herein, the transmission of the data packets may be carried on a PDU session established between the client device and the application server.

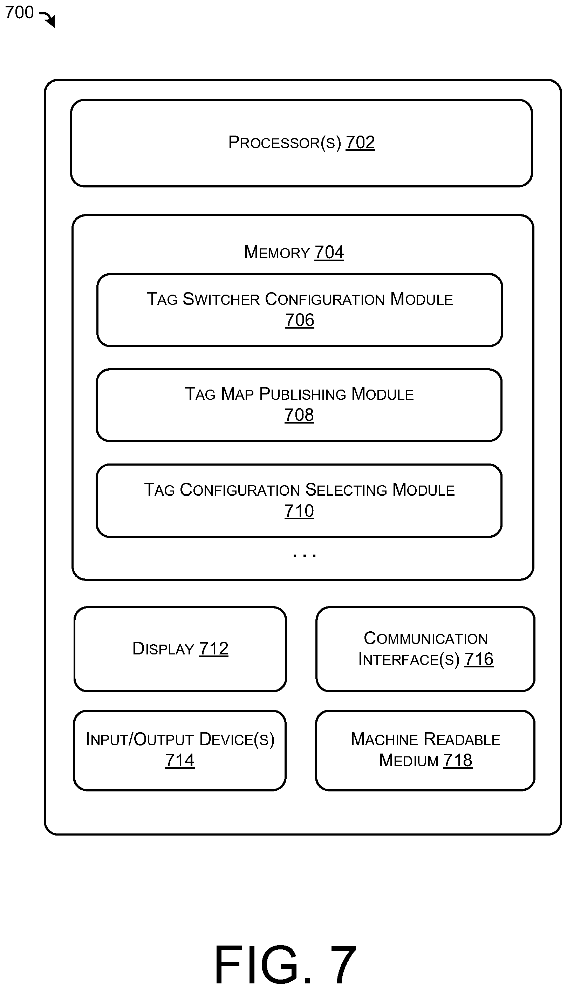

FIG. 7 illustrates an example computer device that implements techniques for network slice switching in a fixed wireless access system, according to the present disclosure. The example computer device 700 may correspond to the router 104(1), as shown in FIGs. 1-4.

As illustrated in FIG. 7, the computer device 700 may comprise processor(s) 702, a memory 704 storing a tag switcher configuration module 706, a tag map publishing module 708, and a tag configuration selecting module 710, a display 712, input/output device(s) 714, communication interface(s) 716, and/or a machine readable medium 718.

In various examples, the processor(s) 702 can be a central processing unit (CPU), a graphics processing unit (GPU), or both CPU and GPU, or any other type of processing unit. Each of the one or more processor(s) 702 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 702 may also be responsible for executing all computer applications stored in memory 704, which can be associated with common types of volatile (RAM) and/or nonvolatile (ROM) memory.

In various examples, the memory 704 can include system memory, which may be volatile (such as RAM), non-volatile (such as ROM, flash memory, etc.) or some combination of the two. The memory 704 can further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which can be used to store desired information and which can be accessed by the computer device 700. Any such non-transitory computer-readable media may be part of the computer device 700.

The tag switcher configuration module 706 may be configured to generate a mapping table that describes a correspondence between the tags, the QoS categories, and the network slices. In some examples, the tag switcher configuration module 706 may generate the mapping table based on the device mapping tables configured by multiple client devices on the FWA system. In some example, the tag switcher configuration module 706 may generate the mapping table to be used universally by the multiple client devices on the FWA system.

The tag map publishing module 708 may be configured to publish a tag map to all the client devices on the FWA system. In some examples, the tag map may include a mapping between a set of tags and/or tag IDs and one or more QoS categories.

The network slice selecting module 710 may be configured to select a corresponding network slice based on a tag associated with an outgoing data packet. In some example, the network slice selecting module 710 may refer to the mapping table generated by the tag switcher configuration module 706 so as to determine a network slice to accommodate the QoS needs.

The communication interface(s) 716 can include transceivers, modems, interfaces, antennas, and/or other components that perform or assist in exchanging radio frequency (RF) communications with base stations of the telecommunication network, a Wi-Fi access point, and/or otherwise implement connections with one or more networks. For example, the communication interface(s) 716 can be compatible with multiple radio access technologies, such as 5G radio access technologies and 4G/LTE radio access technologies. Accordingly, the communication interfaces 716 can allow the computer device 700 to connect to the 5G system described herein.

Display 712 can be a liquid crystal display or any other type of display commonly used in the computer device 700. For example, display 712 may be a touch-sensitive display screen and can then also act as an input device or keypad, such as for providing a soft-key keyboard, navigation buttons, or any other type of input. Input/output device(s) 714 can include any sort of output devices known in the art, such as display 712, speakers, a vibrating mechanism, and/or a tactile feedback mechanism. Input/output device(s) 714 can also include ports for one or more peripheral devices, such as headphones, peripheral speakers, and/or a peripheral display. Input/output device(s) 714 can include any sort of input devices known in the art. For example, input/output device(s) 714 can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism.

The machine readable medium 718 can store one or more sets of instructions, such as software or firmware, which embodies any one or more of the methodologies or functions described herein. The instructions can also reside, completely or at least partially, within the memory 704, processor(s) 702, and/or communication interface(s) 716 during execution thereof by the computer device 700. The memory 704 and the processor(s) 702 also can constitute machine readable media 718.

The various techniques described herein may be implemented in the context of computer-executable instructions or software, such as program modules, that are stored in computer-readable storage and executed by the processor(s) of one or more computing devices such as those illustrated in the figures. Generally, program modules include routines, programs, objects, components, data structures, etc., and define operating logic for performing particular tasks or implement particular abstract data types.

Other architectures may be used to implement the described functionality and are intended to be within the scope of this disclosure. Furthermore, although specific distributions of responsibilities are defined above for purposes of discussion, the various functions and responsibilities might be distributed and divided in different ways, depending on circumstances.

Similarly, software may be stored and distributed in various ways and using different means, and the particular software storage and execution configurations described above may be varied in many different ways. Thus, software implementing the techniques described above may be distributed on various types of computer-readable media, are not limited to the forms of memory that are specifically described.

### CONCLUSION

Although the subject matter has been described in language specific to structural features and/or methodological acts, it is to be understood that the subject matter is not necessarily limited to the specific features or acts described above. Rather, the specific features and acts described above are disclosed as example examples.

While one or more examples of the techniques described herein have been described, various alterations, additions, permutations and equivalents thereof are included within the scope of the techniques described herein.

In the description of examples, reference is made to the accompanying drawings that form a part hereof, which show by way of illustration specific examples of the claimed subject matter. It is to be understood that other examples can be used and that changes or alterations, such as structural changes, can be made. Such examples, changes or alterations are not necessarily departures from the scope with respect to the intended claimed subject matter. While the steps herein can be presented in a certain order, in some cases the ordering can be changed so that certain inputs are provided at different times or in a different order without changing the function of the systems and methods described. The disclosed procedures could also be executed in different orders. Additionally, various computations that are herein need not be performed in the order disclosed, and other examples using alternative orderings of the computations could be readily implemented. In addition to being reordered, the computations could also be decomposed into sub-computations with the same results.

### EXAMPLE CLAUSE

The present disclosure may further be understood with clauses as follows.
A. A device configured to route outgoing data traffic generated in a network, comprising: a processor; a non-transitory computer-readable memory storing computer-executable instructions that, when executed by the processor, cause the processor to: receive, from a first client device on the network, a request to transmit data packets associated with a service to a service provider located external of the network; obtain, from the request, a first tag being indicative of a first quality of service (QoS) category requested by the service; determine, based on the first tag, a network slice to be assigned for the service; establish, via a wireless network, a session corresponding to the network slice between the first client device and the service provider; and facilitate transmission of the data packets associated with the service on the session.
B. The device as recited in paragraph A, wherein the computer-executable instructions that, when executed by the processor, further cause the processor to: receive, from the first client device, a first tagging table configured by the first client device, the first tagging table defining a set of first tags to represent one or more QoS categories; associate, based on the one or more QoS categories, the set of first tags with corresponding network slices; and generate, in a database, a first mapping table associated with the first client device, the first mapping table including the set of first tags and the corresponding network slices.
C. The device as recited in paragraph B, wherein the computer-executable instructions that, when executed by the processor, further cause the processor to: obtain, from the request, an identification of the first client device; retrieve, from the database and based on the identification, the first mapping table; and determine, based on the first mapping table and the first tag, the network slice.
D. The device as recited in paragraph B, wherein the computer-executable instructions that, when executed by the processor, further cause the processor to: receive, from a second client device on the network, a second tagging table configured by the second client device, the second tagging table defining a set of second tags to represent the one or more QoS categories; associate, based on the one or more QoS categories, the set of second tags with corresponding network slices; and generate, in the database, a second mapping table associated with the second client device, the second mapping table including the set of second tags and the corresponding network slices, wherein the set of second tags are different from the set of the first tags.
E. The device as recited in paragraph A, wherein the computer-executable instructions that, when executed by the processor, further cause the processor to: configure, in a database, a mapping table defining a set of tags to represent one or more QoS categories; and transmit the mapping table to the first client device, wherein the first client device, based on the first QoS category requested by the service, tags the data packets associated with the service using the first tag according to the mapping table.
F. The device as recited in paragraph E, wherein the computer-executable instructions that, when executed by the processor, further cause the processor to: configure, in the database, a translation table that translates the set of tags to a set of network slices, respectively; configure, in the database, a precedence order with respect to the set of network slices, the precedence order indicating an order of secondary network slices to be used when a first network slice is unavailable; and transmit the translation table and the precedence order to the first client device.
G. The device of claim F, wherein the computer-executable instructions that, when executed by the processor, further cause the processor to: determine that the network slice corresponding to the first QoS category is unavailable; determine, based on the precedent order, a secondary network slice from the set of network slices; assign the secondary network slice for the service; and route the data packets to the secondary network slice to be sent to the service provider.
H. A device configured to route outgoing data traffic generated in a network, comprising: a processor; a non-transitory computer-readable memory storing computer-executable instructions that, when executed by the processor, cause the processor to: receive, from a client device on the network, a request to transmit data packets associated with a service to a service provider located external of the network; obtain, from the request, an identification of the client device and an internet protocol (IP) address of the service provider; input the identification of the client device and the IP address of the service provider to a machine learning model; execute the machine learning model to determine a network slice to be assigned for the service; establish, via a wireless network, a session corresponding to the network slice between the client device and the service provider; and facilitate transmission of the data packets associated with the service on the session.
I. The device as recited in paragraph H, wherein the computer-executable instructions that, when executed by the processor, further cause the processor to: obtain tagging data associated with historical data packets outgoing the network; generate, based on the tagging data, training data; and train, using the training data, the machine learning model to automatically tag an outgoing data packet with a first network slice.
J. A method for routing outgoing data traffic generated in a network, comprising: receiving, from a first client device on the network, a request to transmit data packets associated with a service to a service provider located external of the network; obtaining, from the request, a first tag being indicative of a first quality of service (QoS) category requested by the service; determining, based on the first tag, a network slice to be assigned for the service; establishing, via a wireless network, a session corresponding to the network slice between the first client device and the service provider; and facilitating transmission of the data packets associated with the service on the session.
K. The method as recited in paragraph J, further comprising: receiving, from the first client device, a first tagging table configured by the first client device, the first tagging table defining a set of first tags to represent one or more QoS categories; associating, based on the one or more QoS categories, the set of first tags with corresponding network slices; and generating, in a database, a first mapping table associated with the first client device, the first mapping table including the set of first tags and the corresponding network slices.
L. The method as recited in paragraph K, further comprising: obtaining, from the request, an identification of the first client device; retrieving, from the database and based on the identification, the first mapping table; and determining, based on the first mapping table and the first tag, the network slice.
M. The method as recited in paragraph K, further comprising: receiving, from a second client device on the network, a second tagging table configured by the second client device, the second tagging table defining a set of second tags to represent the one or more QoS categories; associating, based on the one or more QoS categories, the set of second tags with corresponding network slices; and generating, in the database, a second mapping table associated with the second client device, the second mapping table including the set of second tags and the corresponding network slices, wherein the set of second tags are different from the set of the first tags.
N. The method as recited in paragraph J, further comprising: configuring, in a database, a mapping table defining a set of tags to represent one or more QoS categories; and transmitting the mapping table to the first client device, wherein the first client device, based on the first QoS category requested by the service, tags the data packets associated with the service using the first tag according to the mapping table.
O. The method as recited in paragraph N, further comprising: configuring, in the database, a translation table that translates the set of tags to a set of network slices, respectively; configuring, in the database, a precedence order with respect to the set of network slices, the precedence order indicating an order of secondary network slices to be used when a first network slice is unavailable; and transmitting the translation table and the precedence order to the first client device.
P. The method as recited in paragraph O, further comprising: determining that the network slice corresponding to the first QoS category is unavailable; determining, based on the precedence order, a secondary network slice from the set of network slices; assigning the secondary network slice for the service; and routing the data packets to the secondary network slice to be sent to the service provider.
R. A non-transitory computer-readable storage medium storing computer-readable instructions, that when executed by a processor, cause the processor to perform actions comprising: receiving, from a first client device on a network, a request to transmit data packets associated with a service to a service provider located external of the network; obtaining, from the request, a first tag being indicative of a first quality of service (QoS) category requested by the service; determining, based on the first tag, a network slice to be assigned for the service; establishing, via a wireless network, a session corresponding to the network slice between the first client device and the service provider; and facilitating transmission of the data packets associated with the service on the session.
S. The non-transitory computer-readable storage medium as recited in paragraph R, wherein the computer-readable instructions, that when executed by a processor, cause the processor to perform actions comprising: receiving, from the first client device, a first tagging table configured by the first client device, the first tagging table defining a set of first tags to represent one or more QoS categories; associating, based on the one or more QoS categories, the set of first tags with corresponding network slices; and generating, in a database, a first mapping table associated with the first client device, the first mapping table including the set of first tags and the corresponding network slices.
T. The non-transitory computer-readable storage medium as recited in paragraph S, wherein the computer-readable instructions, that when executed by a processor, cause the processor to perform actions comprising: obtaining, from the request, an identification of the first client device; retrieving, from the database and based on the identification, the first mapping table; and determining, based on the first mapping table and the first tag, the network slice.
U. The non-transitory computer-readable storage medium as recited in paragraph R, wherein the computer-readable instructions, that when executed by a processor, cause the processor to perform actions comprising: configuring, in a database, a mapping table defining a set of tags to represent one or more QoS categories; and transmitting the mapping table to the first client device, wherein the first client device, based on the first QoS category requested by the service, tags the data packets associated with the service using the first tag according to the mapping table.
V. The non-transitory computer-readable storage medium as recited in paragraph U, wherein the computer-readable instructions, that when executed by a processor, cause the processor to perform actions comprising: configuring, in the database, a translation table that translates the set of tags to a set of network slices, respectively; configuring, in the database, a precedence order with respect to the set of network slices, the precedence order indicating an order of secondary network slices to be used when a first network slice is unavailable; and transmitting the translation table and the precedence order to the first client device.
W. The non-transitory computer-readable storage medium as recited in paragraph U, wherein the computer-readable instructions, that when executed by a processor, cause the processor to perform actions comprising: determining that the network slice corresponding to the first QoS category is unavailable; determining, based on the precedence order, a secondary network slice from the set of network slices; assigning the secondary network slice for the service; and routing the data packets to the secondary network slice to be sent to the service provider.

## Claims

1. A device configured to route outgoing data traffic generated in a network, comprising:
a processor;
a non-transitory computer-readable memory storing computer-executable instructions that, when executed by the processor, cause the processor to:
receive, from a first client device on the network, a request to transmit data packets associated with a service to a service provider located external of the network;
obtain, from the request, a first tag being indicative of a first quality of service (QoS) category requested by the service;
determine, based on the first tag, a network slice to be assigned for the service;
establish, via a wireless network, a session corresponding to the network slice between the first client device and the service provider; and
facilitate transmission of the data packets associated with the service on the session.

2. The device of claim 1, wherein the computer-executable instructions that, when executed by the processor, further cause the processor to:
receive, from the first client device, a first tagging table configured by the first client device, the first tagging table defining a set of first tags to represent one or more QoS categories;
associate, based on the one or more QoS categories, the set of first tags with corresponding network slices; and
generate, in a database, a first mapping table associated with the first client device, the first mapping table including the set of first tags and the corresponding network slices.

3. The device of claim 2, wherein the computer-executable instructions that, when executed by the processor, further cause the processor to:
obtain, from the request, an identification of the first client device;
retrieve, from the database and based on the identification, the first mapping table; and
determine, based on the first mapping table and the first tag, the network slice.

4. The device of claim 2, wherein the computer-executable instructions that, when executed by the processor, further cause the processor to:
receive, from a second client device on the network, a second tagging table configured by the second client device, the second tagging table defining a set of second tags to represent the one or more QoS categories;
associate, based on the one or more QoS categories, the set of second tags with corresponding network slices; and
generate, in the database, a second mapping table associated with the second client device, the second mapping table including the set of second tags and the corresponding network slices,
wherein the set of second tags are different from the set of the first tags.

5. The device of claim 1, wherein the computer-executable instructions that, when executed by the processor, further cause the processor to:
configure, in a database, a mapping table defining a set of tags to represent one or more QoS categories; and
transmit the mapping table to the first client device,
wherein the first client device, based on the first QoS category requested by the service, tags the data packets associated with the service using the first tag according to the mapping table.

6. The device of claim 5, wherein the computer-executable instructions that, when executed by the processor, further cause the processor to:
configure, in the database, a translation table that translates the set of tags to a set of network slices, respectively;
configure, in the database, a precedence order with respect to the set of network slices, the precedence order indicating an order of secondary network slices to be used when a first network slice is unavailable; and
transmit the translation table and the precedence order to the first client device.

7. The device of claim 6, wherein the computer-executable instructions that, when executed by the processor, further cause the processor to:
determine that the network slice corresponding to the first QoS category is unavailable;
determine, based on the precedent order, a secondary network slice from the set of network slices;
assign the secondary network slice for the service; and
route the data packets to the secondary network slice to be sent to the service provider.

8. A method for routing outgoing data traffic generated in a network, comprising:
receiving, from a first client device on the network, a request to transmit data packets associated with a service to a service provider located external of the network;
obtaining, from the request, a first tag being indicative of a first quality of service (QoS) category requested by the service;
determining, based on the first tag, a network slice to be assigned for the service;
establishing, via a wireless network, a session corresponding to the network slice between the first client device and the service provider; and
facilitating transmission of the data packets associated with the service on the session.

9. The method of claim 8, further comprising:
receiving, from the first client device, a first tagging table configured by the first client device, the first tagging table defining a set of first tags to represent one or more QoS categories;
associating, based on the one or more QoS categories, the set of first tags with corresponding network slices; and
generating, in a database, a first mapping table associated with the first client device, the first mapping table including the set of first tags and the corresponding network slices.

10. The method of claim 9, further comprising:
obtaining, from the request, an identification of the first client device;
retrieving, from the database and based on the identification, the first mapping table; and
determining, based on the first mapping table and the first tag, the network slice.

11. The method of claim 9, further comprising:
receiving, from a second client device on the network, a second tagging table configured by the second client device, the second tagging table defining a set of second tags to represent the one or more QoS categories;
associating, based on the one or more QoS categories, the set of second tags with corresponding network slices; and
generating, in the database, a second mapping table associated with the second client device, the second mapping table including the set of second tags and the corresponding network slices,
wherein the set of second tags are different from the set of the first tags.

12. The method of claim 8, further comprising:
configuring, in a database, a mapping table defining a set of tags to represent one or more QoS categories; and
transmitting the mapping table to the first client device,
wherein the first client device, based on the first QoS category requested by the service, tags the data packets associated with the service using the first tag according to the mapping table.

13. The method of claim 12, further comprising:
configuring, in the database, a translation table that translates the set of tags to a set of network slices, respectively;
configuring, in the database, a precedence order with respect to the set of network slices, the precedence order indicating an order of secondary network slices to be used when a first network slice is unavailable; and
transmitting the translation table and the precedence order to the first client device.

14. The method of claim 12, further comprising:
determining that the network slice corresponding to the first QoS category is unavailable;
determining, based on the precedence order, a secondary network slice from the set of network slices;
assigning the secondary network slice for the service; and
routing the data packets to the secondary network slice to be sent to the service provider.

15. A computer-readable storage medium storing computer-readable instructions, that when executed by a processor, cause the processor to perform the method of any one of claims 8 to 14.
